# EUROPÄISCHE PATENTSCHRIFT

(11) **EP 2 055 053 B1**
(45) Veröffentlichungstag und Bekanntmachung des Hinweises auf die Patenterteilung: **16.05.2012**
(21) Anmeldenummer: 07802666.3
(22) Anmeldetag: 16.08.2007
(51) Int. Cl.: H04L 12/40, B60H 1/00, H04L 12/413

(54) **VERFAHREN UND VORRICHTUNG ZUM BETRIEB MEHRERER STEUERGERÄTE**
METHOD AND DEVICE FOR OPERATING SEVERAL CONTROL DEVICES
PROCÉDÉ ET DISPOSITIF DESTINÉS À FAIRE FONCTIONNER PLUSIEURS APPAREILS DE COMMANDE

(30) Priorität: 17.08.2006 DE 102006038595
(43) Veröffentlichungstag der Anmeldung: 06.05.2009
(73) Patentinhaber: Continental Automotive GmbH, 30165 Hannover (DE)
(72) Erfinder: MAERZ, Uwe, 65760 Eschborn (DE)
(86) Internationale Anmeldenummer: PCT/EP2007/058535
(87) Internationale Veröffentlichungsnummer: WO 2008/020059

(56) Entgegenhaltungen:
- US-A1- 2002 067 638
- US-A1- 2004 061 500

## Beschreibung

Die Erfindung betrifft ein Verfahren und eine Vorrichtung zum Betrieb mehrerer Steuergeräte in einem Fahrzeug, wobei Daten zwischen den Steuergeräten übertragen werden.

Heutzutage werden in Kraftfahrzeugen verschiedene Steuergeräte eingesetzt. So gibt es Motor- und Getriebesteuergeräte über die der Verbrennungsprozess einer Brennkraftmaschine und die Übertragung der von der Brennkraftmaschine erzeugten Leistung auf Antriebsräder gesteuert werden, Steuergeräte zur Regelung der Fahrdynamik, oder auch Steuergeräte, wie z. B. Türsteuergeräte, mit denen Komfortfunktionen im Kraftfahrzeug realisiert werden. Über ein oder mehrere Bussysteme können die verschiedenen Steuergeräte Daten austauschen. Üblicherweise werden hierzu CAN-Bussysteme verwendet.

Die in einem Fahrzeug enthaltenen Steuergeräte weisen verschiedene Arten von Speicher auf. So wird zwischen flüchtigem und nichtflüchtigem Speicher unterschieden. In einem flüchtigen Speicher gehen die gespeicherten Daten nach dem Ausschalten der Versorgungsspannung des Steuergerätes verloren, wogegen die Daten in einem nichtflüchtigen Speicher erhalten bleiben. Das Ausschalten der Versorgungsspannung erfolgt z. B. innerhalb einer gewissen Zeitspanne nach der Deaktivierung der Zündung des Fahrzeugs (Abschaltung Klemme 15). Neben diesen beiden Speicherarten gibt es auch noch den so genannten Funktionsspeicher, d. h. einen Speicher in dem Funktionsprogramme und Betriebssysteme des jeweiligen Steuergerätes abgelegt sind. Der Funktionsspeicher wird im normalen Betrieb des Fahrzeugs nicht verändert, sondern nur bei der Herstellung oder beim Service des Fahrzeugs durch so genanntes flashen.

Im normalen Betrieb des Fahrzeugs treten Daten auf, die zeitvariant sind und auch nach dem Ausschalten der Zündung (Wegfall der Versorgungsspannung der Steuergeräte innerhalb einer gewissen Zeitspanne) zur Verfügung stehen müssen, da sie nach einer erneuten Aktivierung der Zündung benötigt werden. Diese Art von Daten wird im Folgenden als nichtflüchtige Daten bezeichnet (dauerhaft benötigte Daten). Als Beispiele für nichtflüchtige Daten können die einer Klimaanlage vorgegebene Solltemperatur, die eingestellten Sender oder die eingestellte Lautstärke eines Radios, die Einstellung eines Spiegel oder eines Sitzes oder die Position eines Fensters genannt werden. Es sind Daten, die im normalen Betrieb des Fahrzeugs, z. B. vom Fahrer geändert werden können, die aber dennoch nach dem Ausschalten und dem Wiedereinschalten der Zündung benötigt werden (so genannte Konfigurations- oder Betriebsdaten). Die beispielhaft genannte Klimaanlage, das Radio, der Spiegel, der Sitz, die Fenster und das eingangs beispielhaft genannte Getriebe, der Motor stellen voneinander verschiedene Systeme dar, die nachfolgend als Systeme bezeichnet werden.

Üblicherweise umfasst jedes in einem Fahrzeug eingesetzte Steuergerät neben einem flüchtigen Speicher (RAM) und einem Funktionsspeicher auch einen nichtflüchtigen Speicher (ROM) zur Speicherung der nichtflüchtigen Daten. Hierdurch entstehen Kosten.

Aufgabe der vorliegenden Erfindung ist es, ein kostengünstiges Verfahren und eine kostengünstige Vorrichtung zum Betrieb mehrerer Steuergeräte zur Verfügung zu stellen. Diese Aufgabe wird erfindungsgemäß durch des Verfahren gemäß Anspruch 1 und die Vorrichtung gemäß Anspruch 5 gelöst. Nichtflüchtige Daten werden zwischen den Steuergeräten übertragen werden Nichtflüchtige Daten zumindest eines Steuergerätes werden in einem nichtflüchtigen Speicher eines anderen Steuergerätes gespeichert. Durch die Speicherung der nichtflüchtigen Daten des eines Steuergerätes in den nichtflüchtigen Speicher des anderen Steuergerätes kann der nichtflüchtige Speicher des einen Steuergerätes kleiner dimensioniert werden oder sogar entfallen. Hierdurch werden Kosten eingespart. Auch Geräte zur

Speicherung von Daten, wie z. B. externe Festplatten, sind im Sinne der Erfindung als Steuergeräte anzusehen.

Eine vorteilhafte Ausgestaltung des erfindungsgemäßen Verfahrens besteht darin, dass die nichtflüchtigen Daten zwischen den Steuergeräten über ein Bussystem übertragen werden.

In einer weiteren vorteilhaften Ausführung der Erfindung werden die nichtflüchtigen Daten zwischen den Steuergeräten ereignisgesteuert übertragen. Unter ereignisgesteuert ist zu verstehen, dass der Datenaustausch unmittelbar oder zeitnah erfolgt, nachdem neue nichtflüchtige Daten anfallen oder Werte/Parameter von nichtflüchtigen Daten verändert werden. Diese Ausführung weist den Vorteil auf, dass die in dem nichtflüchtigen Speicher abgelegten nichtflüchtigen Daten aktuell sind.

In einer anderen vorteilhaften Ausgestaltung werden die nichtflüchtigen Daten zwischen den Steuergeräten in einer Nachlaufphase übertragen. Die Nachlaufphase bezeichnet die Zeitspanne nach dem Abschalten einer Klemme 15 (Abschalten der Zündung) im Fahrzeug innerhalb derer die Steuergeräte weiterhin aktiv sind. Diese Ausgestaltung weist den Vorteil auf, dass die Übertragung von Daten, die während eingeschalteter Zündung des Fahrzeugs anfallen (Klemme 15 eingeschaltet), z. B. Daten zur Steuerung des Verbrennungsprozesses der Brennkraftmaschine, nicht durch die Übertragung der nichtflüchtigen Daten gestört wird.

Des Weiteren beinhaltet die Erfindung eine Vorrichtung zum Betrieb mehrerer Steuergeräte in einem Fahrzeug, die zumindest eine Datenverbindung für einen Austausch von Daten zwischen den Steuergeräten aufweist, wobei zumindest einem Steuergerät zur Speicherung von nichtflüchtigen Daten ein nichtflüchtiger Speicher eines anderen Steuergerätes zugeordnet ist.

In einer vorteilhaften Ausgestaltung ist die Datenverbindung als Bussystem realisiert.

Vorzugsweise ist bei der erfindungsgemäßen Vorrichtung vorgesehen, dass der nichtflüchtige Speicher als EEPROM realisiert ist. EEPROM-Speicher können elektrisch gelöscht und beschrieben werden. Des Weiteren sind sie kostengünstig erhältlich.

Besonders vorteilhaft ist eine Ausführung bei der zumindest ein Steuergerät keinen nichtflüchtigen Speicher aufweist. Die Steuergeräte ohne nichtflüchtigen Speicher und somit auch die erfindungsgemäße Vorrichtung können besonders kostengünstig hergestellt werden.

Die Erfindung lässt zahlreiche Ausführungsformen zu. Eine davon ist schematisch in der Zeichnung anhand mehrerer Figuren dargestellt und nachfolgend beschrieben. Es zeigen:
- Figur 1: ein Blockschaltbild einer Vorrichtung zum Betrieb mehrerer Steuergeräte und
- Figur 2: ein Ablaufdiagramm eines Verfahrens zum Betrieb der in Figur 1 dargestellten Vorrichtung.

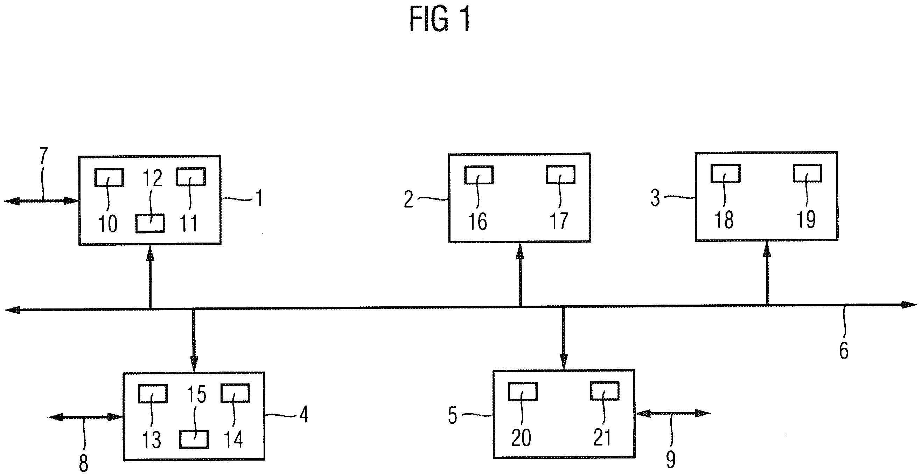

In Figur 1 ist eine Vorrichtung zum Betrieb mehrerer Steuergeräte in einem Fahrzeug dargestellt. Die Vorrichtung umfasst fünf Steuergeräte 1-5, die über ein Bussystem 6 Daten miteinander austauschen können. Des Weiteren kann eine Datenübertragung zwischen drei Steuergeräten 1, 4, 5 und weiteren, nicht in der Figur 1 dargestellten Geräten über zusätzliche Bussysteme 7, 8, 9 erfolgen. Sämtliche Steuergeräte 1-5 weisen einen Funktionsspeicher 10, 13, 16, 18, 20 sowie einen flüchtigen Speicher 11, 14, 17, 19, 21 auf. In den Funktionsspeichern 10, 13, 16, 18, 20 werden Daten abgelegt, die im normalen Betrieb des Fahrzeugs nicht verändert werden, sondern nur bei der Herstellung oder im Servicefall. Die in den flüchtigen Speichern 11, 14, 17, 19, 21 abgelegten Daten gehen nach dem Abschalten der Versorgungsspannung der Steuergeräte 1-5 verloren. Dagegen weisen nur zwei Steuergeräte 1, 4 einen nichtflüchtigen Speicher 12, 15 zur Speicherung von nichtflüchtigen Daten, die nach dem Abschalten und Wiedereinschalten der Versorgungsspannung zur Verfügung stehen müssen, auf. Die nichtflüchtigen Daten der Steuergeräte 2, 3, 5, welche nur jeweils einen Funktionsspeicher 16, 18, 20 und einen flüchtigen Speicher 17, 19, 21 aufweisen, werden in den nichtflüchtigen Speichern 12, 15 der entsprechenden Steuergeräte 1, 4 gespeichert. Hierzu werden diese nichtflüchtigen Daten über das Bussystem 6 übertragen. Nach dem Abschalten und dem Wiedereinschalten der Versorgungsspannung der Steuergeräte 1-5 werden diese nichtflüchtigen Daten über das Bussystem 6 von den nichtflüchtigen Speichern 12, 15 zu den entsprechenden Steuergeräten 2, 3, 5 zurück übertragen und stehen dort zur Verfügung. Da die Steuergeräte 2, 3, 5 keine nichtflüchtigen Speicher aufweisen, kann die Vorrichtung kostengünstig realisiert werden.

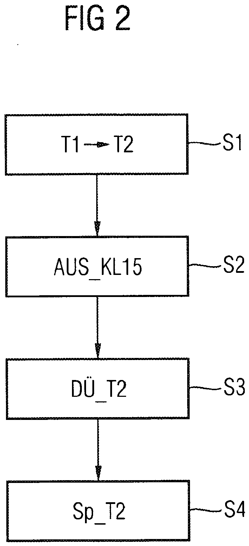

In Figur 2 ist ein Ablaufdiagramm eines Verfahrens zum Betrieb der in Figur 1 dargestellten Vorrichtung gezeigt. In einem Schritt S1 wird ein nichtflüchtiges Datum des Steuergerätes 2 von einen Wert T1 auf einen Wert T2 geändert. Die Werte T1, T2 repräsentieren Sollvorgaben für eine Innentemperatur des Fahrzeugs. Die Änderung erfolgt von einem Fahrer des Fahrzeugs. In einem Schritt S2 wird eine Klemme 15 des Fahrzeugs ausgeschaltet. Durch das Ausschalten wird eine Nachlaufphase eingeleitet. Daraufhin erfolgt in einem Schritt S3 eine Übertragung des nichtflüchtigen Datums T2 von dem Steuergerät 2 zu dem Steuergerät 1 während der Nachlaufphase. In einem Schritt S4 erfolgt eine Speicherung des an das Steuergerät 1 übertragenen nichtflüchtigen Datums T2 in den nichtflüchtigen Speicher 12 des Steuergerätes 1.

## Patentansprüche

1. Verfahren zum Betrieb mehrerer Steuergeräte (1-5) in einem Fahrzeug, wobei zumindest zwei Steuergeräte (1-5) Bestandteil jeweils eines von mindestens zwei voneinander verschiedenen Systemen sind, und Daten zwischen den Steuergeräten (1-5) übertragen werden, **dadurch gekennzeichnet, dass** nichtflüchtige Daten zwischen den Steuergeräten übertragen werden und nichtflüchtige Daten zumindest eines (2, 3, 5) der zumindest zwei Steuergeräte (1-5) in einem nichtflüchtigen Speicher (12, 15) eines anderen (1, 4) der zumindest zwei Steuergeräte (1-5) gespeichert werden.

2. Verfahren nach Anspruch 1, **dadurch gekennzeichnet, dass** die nichtflüchtigen Daten zwischen den Steuergeräten (1-5) über ein Bussystem (6) übertragen werden.

3. Verfahren nach Anspruch 1 oder 2, **dadurch gekennzeichnet, dass** die nichtflüchtigen Daten zwischen den Steuergeräten (1-5) ereignisgesteuert übertragen werden.

4. Verfahren nach Anspruch 1 oder 2, **dadurch gekennzeichnet, dass** die nichtflüchtigen Daten zwischen den Steuergeräten (1-5) in einer Nachlaufphase übertragen werden.

5. Vorrichtung zum Betrieb mehrerer Steuergeräte (1-5) in einem Fahrzeug, wobei zumindest zwei Steuergerät (1-5) Bestandteil jeweils eines von mindestens zwei voneinander verschiedenen Systemen sind, die Vorrichtung die zumindest zwei Steuergeräte aufweist, zumindest eines der zumindest zwei Steuergeräte einen nichtflüchtigen Speicher aufweist, und eine Datenverbindung (6) für einen Austausch von Daten zwischen den Steuergeräten (1-5) vorhanden ist, **dadurch gekennzeichnet, dass** zumindest ein Steuergerät (2, 3, 5) dazu ausgebildet ist, in seinem nichtflüchtigen Speicher nichtflüchtige Daten eines anderen (1-4) der zumindest zwei Steuergeräte (1-5) zu speichern.

6. Vorrichtung nach Anspruch 5, **dadurch gekennzeichnet, dass** die Datenverbindung (6) als Bussystem (6) realisiert ist.

7. Vorrichtung nach Anspruch 5 oder 6, **dadurch gekennzeichnet, dass** der nichtflüchtige Speicher (12, 15) als EEPROM realisiert ist.

8. Vorrichtung nach einem der vorstehenden Ansprüche 5 bis 7, **dadurch gekennzeichnet,dass** zumindest ein Steuergerät (2, 3, 5) keinen nichtflüchtigen Speicher (12, 15) aufweist.

## Claims

1. Method for operating a plurality of control units (1 - 5) in a vehicle, wherein at least two control units (1 - 5) are part of respectively one of at least two mutually different systems, and data are transmitted between the control units (1 - 5), **characterized in that** non-volatile data are transmitted between the control units and non-volatile data of at least one (2, 3, 5) of the at least two control units (1 - 5) are stored in a non-volatile memory (12, 15) of another (1, 4) of the at least two control units (1 - 5).

2. Method according to Claim 1, **characterized in that** the non-volatile data are transmitted between the control units (1 - 5) via a bus system (6).

3. Method according to Claim 1 or 2, **characterized in that** the non-volatile data are transmitted between the control units (1 - 5) in an event-controlled manner.

4. Method according to Claim 1 or 2, **characterized in that** the non-volatile data are transmitted between the control units (1 - 5) in a follow-up phase.

5. Device for operating a plurality of control units (1 - 5) in a vehicle, wherein at least two control units (1 - 5) are part of respectively one of at least two mutually different systems, the device has the at least two control units, at least one of the at least two control units has a non-volatile memory, and a data link (6) is present for exchanging data between the control units (1 - 5), **characterized in that** at least one control unit (2, 3, 5) is designed to store in its non-volatile memory non-volatile data of another (1 - 4) of the at least two control units (1 - 5).

6. Device according to Claim 5, **characterized in that** the data link (6) is realized as a bus system (6).

7. Device according to Claim 5 or 6, **characterized in that** the non-volatile memory (12, 15) is realized as EEPROM.

8. Device according to any of the preceding Claims 5 to 7, **characterized in that** at least one control unit (2, 3, 5) has no non-volatile memory (12, 15).

## Revendications

1. Procédé pour faire fonctionner plusieurs appareils (1 à 5) de commande dans un véhicule, dans lequel au moins deux appareils (1 à 5) de commande font partie respectivement de l'un d'au moins deux systèmes différents l'un de l'autre et des données sont transmises entre les appareils (1 à 5) de commande, **caractérisé en ce que** l'on transmet des données non volatiles entre les appareils de commande et on mémorise des données non volatiles d'au moins l'un (2, 3, 5) des au moins deux appareils (1 à 5) de commande dans une mémoire (12, 15) rémanente d'un autre (1, 4) des au moins deux appareils (1 à 5) de commande.

2. Procédé suivant la revendication 1, **caractérisé en ce que** l'on transmet les données non volatiles entre les appareils (1 à 5) de commande par un système (6) de bus.

3. Procédé suivant la revendication 1 ou 2, **caractérisé en ce que** l'on transmet d'une manière commandée par un évènement les données non volatiles entre les appareils (1 à 5) de commande.

4. Procédé suivant la revendication 1 ou 2, **caractérisé en ce que** l'on transmet dans une phase de correction les données non volatiles entre les appareils (1 à 5) de commande.

5. Dispositif pour faire fonctionner plusieurs appareils (1 à 5) dans un véhicule dans lequel au moins deux appareils (1 à 5) de commande font partie respectivement de l'un d'au moins deux systèmes différents l'un de l'autre, le dispositif comportant les au moins deux appareils de commande, au moins l'un des au moins deux appareils de commande ayant une mémoire rémanente et une liaison (6) de données pour un échange de données entre les appareils (1 à 5) de commande étant prévue, **caractérisé en ce qu'**au moins un appareil (2, 3, 5) de commande est constitué pour mémoriser dans sa mémoire rémanente des données non volatiles d'un autre (1 à 4) des au moins deux appareils (1 à 5) de commande.

6. Procédé suivant la revendication 5, **caractérisé en ce que** la liaison (6) de donnée est réalisée en système (6) de bus.

7. Procédé suivant la revendication 5 ou 6, **caractérisé en ce que** la mémoire (12, 15) rémanente est réalisée en EEPROM.

8. Procédé suivant l'une des revendications précédentes 5 à 7, **caractérisé en ce qu'**au moins un appareil (2, 3, 5) de commande n'a pas de mémoire (12, 15) rémanente.
